# EUROPEAN PATENT SPECIFICATION

(11) **EP 2 226 979 B1**
(45) Date of publication and mention of the grant of the patent: **30.05.2012**
(21) Application number: 09305198.5
(22) Date of filing: 03.03.2009
(51) Int. Cl.: H04L 29/08, H04L 12/58, H04L 12/26

(54) **Method for generating a report of the logs operated by a terminal through the Internet.**
Verfahren zur Erzeugung eines Berichts über die von einem Endgerät über das Internet betriebenen Protokolle
Procédé de génération d'un rapport de journaux commandé par un terminal sur Internet

(43) Date of publication of application: 08.09.2010
(73) Proprietor: Alcatel Lucent, 75007 Paris (FR)
(72) Inventor: Elleouet, Jérôme, 29870 Lannilis (FR); Dantec, Fabrice, 29290 Saint Renan (FR)
(74) Representative: Nicolle, Olivier

(56) References cited:
- WO-A-00/59167
- US-A1- 2005 254 481
- US-A1- 2006 002 536

## Description

The invention relates to a method for generating a report of the logs operated by a terminal through the Internet.

It is known for a person to use a terminal, typically a computer, in order to establish or receive, through the Internet, different communications thereafter called logs. Typically, logs are performed via an Internet browser like Google^{™} or via an electronic mailer like Outlook^{™}.

An increasing number of users desires a quick access to the operated logs, for instance to check if they have received a mail or a call during their absence or to access to a former instant messaging discussion.

In other words, more and more users desire to have access to their log histories.

For that purpose, applications like "My Instant Communicator" of Alcatel-Lucent have been developed. In such application, a user can have an access to a log history page created by a Unified Communication server registering the Internet log events of a terminal.

In that case, the history pages might comprise indicators, which help the user to know if she/he has received a voice message, like a Message Waiting Indicator or a blinking icon.

Disappointingly, such method comprises drawbacks. For instance, it does not provide a single report of the logs but a plurality of reports depending on the considered application e.g. Internet Browser or mailer - used to operate the logs. Thus, the user must take time, first, to obtain all the required reports and, then, to check them.

Another drawback of this known method relies on that the user must provide a plurality of passwords and/or identifications to launch the application each time a report is requested. Again, this requires time to the user and increases thereby the cost of the operation.

Prior art document WO 00/59167 discloses an unified communication log (accessible via a web portal) and a notification method supported by a "Message Notification" module communicating with a program on the user's computer (e.g. a plug-in to a web browser). The user's computer program may poll the message notification unit periodically.

The present invention aims to solve at least one of the hereinabove indicated drawbacks by providing a method which delivers a unique Internet log report to the user of a terminal.

For that purpose, the invention derives from the finding that most of the multimedia applications offer the opportunity to subscribe to Real Simple Syndication feeds, usually called RSS feeds.

More precisely, the invention relates to a method for generating a report which updates the logs operated by a terminal as further defined in claim 1.

When implementing this method, a RSS reader application periodically generates reports which comprise an update of the logs operated by the terminal independently of the application - e.g. Internet Browser or mailer - used for such logs.

In other words, embodiments of the invention allow delivering automatically a single report to a terminal user so that this user can easily have an overview of the terminal logs. Thereby, the invention provides a feature which allows to see easily the logs histories, for instance through a browser or a mailer.

As described thereafter, it must be underlined that RSS format presents as such some drawbacks which could have been detrimental to the invention as a possible lack of secure connections.

Nevertheless, embodiments of the invention provide confidentiality to the RSS feeds since the RSS' reports are locally obtained by the RSS reader application i.e. within the terminal.

In one embodiment, the Internet server application communicates with the Unified Communication server through a secure protocol which encrypts the transmitted data.

In this case, the secure protocol might be the Secure Hyper Text Transfer Protocol.

In one embodiment, the Internet server application is run by a log report generator which requires a single user identification to start this application and to allow the RSS reader application obtaining the update report.

In this case, the required single user identification might be provided to the log report generator by a previous application of the terminal having requested such identification. For instance, such previous application might be the operating system of the terminal.

For that purpose, a NT LAN Manager application - or NTLM, which is a Microsoft authentication protocol might use the previous identification for the log report generator identification.

In one embodiment, the log report generator displays the log report in an open window of the terminal. For instance, the open window might relate to an Internet browser, a mailer or an operating system interface.

In one embodiment, the log report identifies logs from voice calls and/or electronic mails.

In one embodiment, an action is associated to at least one reported log. For instance, such action might be one of the following actions: generating a call, displaying identification, sending an electronic mail.

In one embodiment, the Internet server application is associated to an URL - for Uniform Resource Locator - wherefrom the RSS reader obtains the update report.

The invention also relates to a terminal implementing both a RSS reader application and an Internet server application as further defined in claim 11.

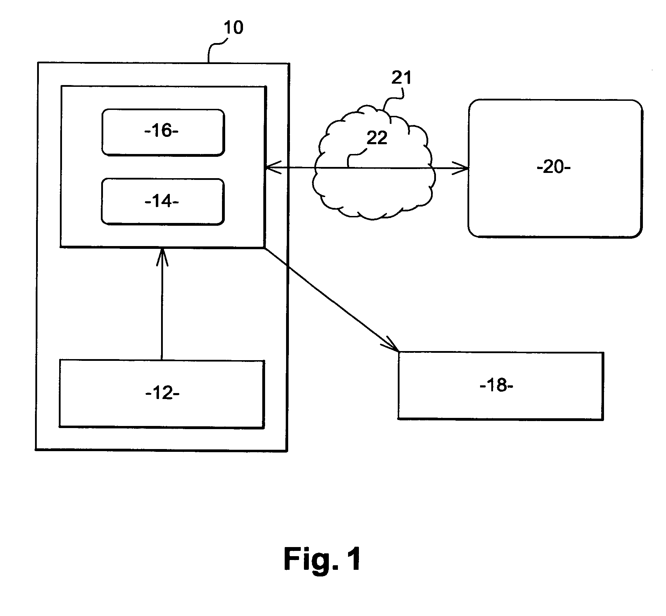

The foregoing aspects and many of the attendant advantages of this invention will become more readily appreciated as the same becomes better understood by reference to the following detailed description when taking in conjunction with the accompanying drawing which is a functional representation of a preferred embodiment of the invention.

As represented in such drawing, a terminal 10 according to the invention comprises a RSS reader application 12, also called "RSS reader", "feed reader", or "aggregator", which is a software.

The RSS reader application 12 can be web-based, desktop-based, mobile device or any computerized Internet-connected device. Indeed, wherever a Web application is located, a part of its web pages are executed locally so that the RSS feed has to be requested on this part.

In this embodiment of the invention, the RSS reader application 12 is within the terminal 10 in order to guarantee that the log reports 18, which are displayed through the terminal 10 interface to his/her user, are kept confidential i.e. within the terminal 10.

Indeed, it is reminded that RSS feeds cannot guarantee a secure transmission of data through the Internet since some RSS reader applications, like Google TM, do not implement a secure function.

As it is commonly known, the RSS reader application 12 can obtain a report 18 - which comprises updates - of a Website. Typically, such report comprises - full or summarized - text and metadata such as publishing dates and authorship.

For that purpose, the RSS reader application 12 retrieves a feed periodically - e.g. every minute - by requesting through an HTTP GET order such document to the Internet server application 14. Thereafter, such feed is displayed by the RSS reader application 12.

For that purpose, the RSS reader application 12 can address the Internet server application 14 through its URL like:
http://localhost/RSS/MyLogs

The Internet server application 14 is embedded in an application 16, thereafter called log report generator. Such log report generator 16 allows communications 22 between the terminal 10 and a Unified Communication server 20 registering the log events of such terminal 10 through the Internet 21.

In this embodiment, the communications 22 are performed through secure transmissions so that, for instance, encryption is used to code them.

Periodically, or without delay, the Unified Communication server 20 transmits, via the secure communications 22, a report comprising the logs relating to the terminal 10, i.e. towards or from such terminal 10.

For instance, the Unified Communication server 20 might be connected to a call server - through a CSTA protocol for instance - in order to receive begins and ends of the calls relating to terminal 10.

From these events, a call log can be created and stored in the Unified Communication server. For call back requests, MWI and openness of the call server allows to be notified or to retrieve this information.

Thereafter, a report 18 is periodically obtained by the RSS reader application 12 from the Internet server application 14, such report comprising the update of the logs transmitted by the Unified Communication server 20.

In this embodiment, the Internet server application 14 uses Hyper Text Transfer Protocol (HTTP) to publish the RSS feeds while the Secure HTTP is used with the Unified Communication Server 20.

To summarize, the log report generator 16 can use a direct communication with the Unified Communication server 20 and update the RSS feed - in fact an extensible Markup Language file - with the log events of the user.

It must be underlined that this embodiment avoids security problems because no request is done from the RSS reader application 12 - which might be an unsecure application - directly to the Unified Communication server 20.

In this preferred embodiment, the security level of the application is increased since the log report generator 16 can only be operated when the user of the terminal 10 has previously been identified through highly secure authentication mechanism.

As a consequence, the invention provides a "Single Sign On" method to the RSS report 18 because this report 18 can only be accessed when the terminal 10 is already started and the user logged i.e. identified.

As the log report generator 16 is stored in the user terminal 10, different embodiments might be used for such storage:
- For instance, an install program might automatically register the client RSS Feed URL in the most common RSS readers through their Application Programming Interface. This can be done in mailers like Outlook^{™} and Web browser like Firefox^{™} or Internet Explorer^{™} 7.0 for instance.
- In order to develop a user friendly interface, the log report generator 16 may offer a menu to the user in order to subscribe to the RSS log reporting in which case the Internet server application 14 URL is subscribed through the Application Programming Interface by the log report generator 16.
- Finally, the log report generator might be subscribed manually, for instance through the RSS reader application 12, to the Internet server application URL. This solution is particularly interesting for the current RSS readers of the market.

Different embodiments might implement the invention, for instance through different Graphical User Interface i.e. different graphical icons or visual indicators like a Toast window notification which is displayed for a short time into the user interface.

For the sake of completeness, an example of RSS feed reader application is provided hereunder under the RSS standard:

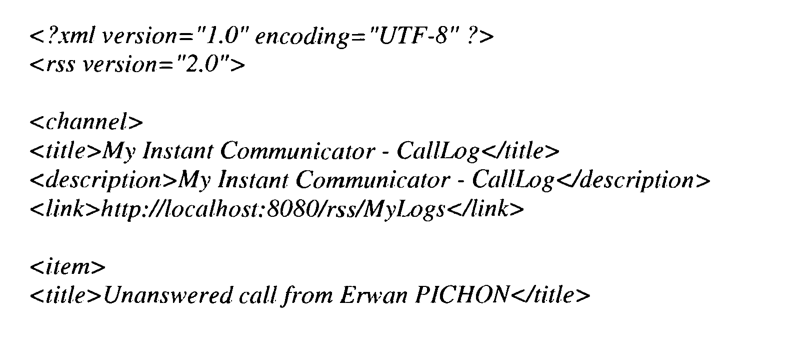

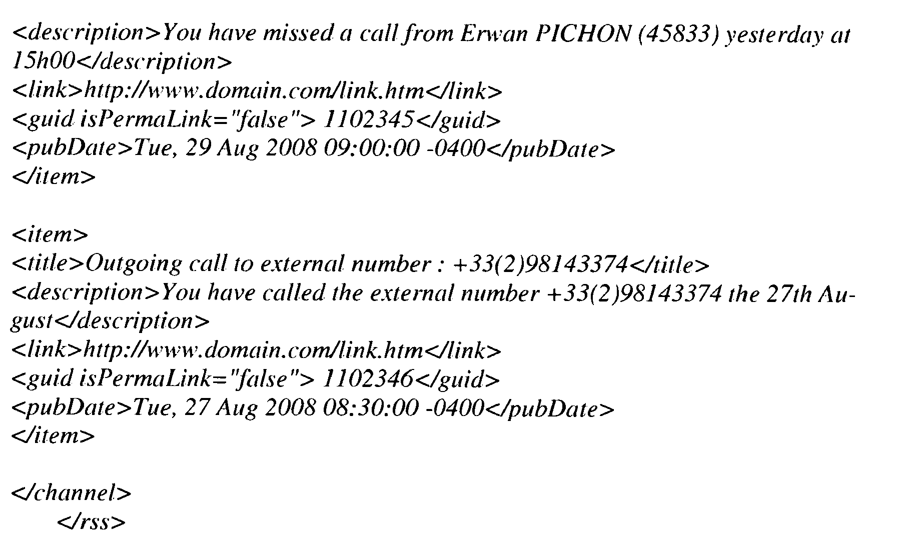

## Claims

1. Method for obtaining a first report (18) which updates the logs operated by a terminal (10) through the Internet, such terminal (10) implementing both a RSS reader application (12) and an Internet server application (14) which is able to communicate with a Unified Communication server (20) registering the Internet log events of the terminal (10), **characterized in that** it comprises the following steps:
- The step of the Unified Communication (20) server periodically transmitting to the Internet server application (14) a second report comprising an update of the logs of the terminal (10)
- The step of the RSS reader application (12) periodically obtaining from the Internet server application (14) the first report (18) which updates the logs operated by the terminal (10).

2. Method according to claim 1 wherein the Internet server application (14) communicates with the Unified Communication server (20) through a secure protocol which encrypts the transmitted data.

3. Method according to claim 2 wherein the secure protocol is the Secure Hyper Text Transfer Protocol.

4. Method according to claim 1, 2 or 3 wherein the Internet server application (14) is run by a log report generator (16) which requires a single user identification to start the Internet server application (14) and to allow the RSS reader application to obtain the first report (18) which updates the logs operated by the terminal (10).

5. Method according to claim 4 wherein the required single user identification is provided to the log report generator (16) by a previous application of the terminal (10) having requested such identification.

6. Method according to claim 5 wherein the previous application is the operating system of the terminal (10).

7. Method according to claims 5 or 6 wherein the log report generator (16) displays the first report which updates the logs operated by the terminal (10) in an open window of the terminal (10).

8. Method according to claim 7 wherein the open window relates to an Internet Brower, a mailer or an operating system interface.

9. Method according to any of the previous claims wherein the first report identifies logs from voice calls and/or electronic mails.

10. Method according to any of the previous claims wherein the Internet server application (14) is associated to an URL wherefrom the RSS reader obtains the first report (18) which updates the logs operated by the terminal (10).

11. Terminal (10) implementing both a RSS reader application (12) and an Internet server application (14) which is able to communicate with a Unified Communication server (20) registering the Internet log events of the terminal (10), **characterized in that** it comprises:
- Means for the Internet server application (14) to periodically receive from the Unified Communication (20) server a first report comprising an update of the logs of the terminal (10), and
- Means for the RSS reader application (12) to periodically obtain from the Internet server application (14) a second report (18) which updates the logs operated by the terminal (10) following a second method according to any of the previous claims.

## Patentansprüche

1. Verfahren zum Erhalten eines ersten Reports (18), welcher die von einem Endgerät (10) über das Internet betriebenen Logs aktualisiert, wobei das besagte Endgerät (10) sowohl eine RSS-Leser-Anwendung (12) als auch eine Internet-Server-Anwendung (14), welche fähig ist, mit einem Server für die vereinheitlichte Kommunikation (20), der die Internet-Log-Ereignisse des Endgeräts (10) registriert, zu kommunizieren, implementiert, **dadurch gekennzeichnet, dass** das Verfahren die folgenden Schritte umfasst:
- Den Schritt des periodischen Übertragens, durch den Server für die vereinheitlichte Kommunikation (20), eines zweiten Reports, welcher eine Aktualisierung der Logs des Endgeräts (10) enthält, an die Internet-Server-Anwendung;
- den Schritt des periodischen Erhaltenes, durch die RSS-Leser-Anwendung (12), des ersten Reports (18), welcher die von dem Endgerät (10) betriebenen Logs aktualisiert, von der Internet-Server-Anwendung (14).

2. Verfahren nach Anspruch 1, wobei die Internet-Server-Anwendung (14) mit dem Server für die vereinheitlichte Kommunikation (20) über ein abgesichertes Protokoll, welches die übertragenen Daten verschlüsselt, kommuniziert.

3. Verfahren nach Anspruch 2, wobei das abgesicherte Protokoll ein abgesichertes Hypertext-Übertragungsprotokoll ist.

4. Verfahren nach Anspruch 1, 2 oder 3, wobei die Internet-Server-Anwendung (14) auf einem Log-Report-Generator (16) läuft, welcher eine Ein-Nutzer-Identifikation erfordert, um die Internet-Server-Anwendung (14) zu starten und es der RSS-Leser-Anwendung zu ermöglichen, den ersten Report (18), welcher die von dem Endgerät (10) betriebenen Logs aktualisiert, zu erhalten.

5. Verfahren nach Anspruch 4, wobei die geforderte Ein-Nutzer-Identifikation durch eine vorherige Anwendung des Endgeräts (10), welche die besagte Identifikation angefordert hat, an den Log-Report-Generator (16) bereitgestellt wird.

6. Verfahren nach Anspruch 5, wobei die vorherige Anwendung das Betriebssystem des Endgerätes (10) ist.

7. Verfahren nach den Ansprüchen 5 oder 6, wobei der Log-Report-Generator (16) den ersten Report, welcher die von dem Endgerät (10) betriebenen Logs aktualisiert, in einem offenen Fenster des Endgeräts (10) anzeigt.

8. Verfahren nach Anspruch 7, wobei sich das offene Fenster auf einen Internet-Browser, einen Mailer oder eine Betriebssystemschnittstelle bezieht.

9. Verfahren nach einem beliebigen der vorstehenden Ansprüche, wobei der erste Report Logs aus Sprachverbindungen und/oder elektronischen Nachrichten identifiziert.

10. Verfahren nach einem beliebigen der vorstehenden Ansprüche, wobei die Internet-Server-Anwendung (14) mit einem URL assoziiert ist, von welchem der RSS-Leser den ersten Report (18), der die von dem Endgerät (10) betriebenen Logs aktualisiert, erhält.

11. Endgerät (10), welches sowohl eine RSS-Leser-Anwendung (12) als auch eine Internet-Server-Anwendung (14), die fähig ist, mit einem Server für die vereinheitlichte Kommunikation (20), der die Internet-Log-Ereignisse des Endgerätes (10) registriert, zu kommunizieren, implementiert, **dadurch gekennzeichnet, dass** es umfasst:
- Mittel zum periodischen Empfangen, durch die Internet-Server-Anwendung (14), eines ersten Reports, welcher eine Aktualisierung der Logs des Endgerätes (10) enthält, von dem Server für die vereinheitlichte Kommunikation (20), und
- Mittel zum periodischen Erhalten, durch die RSS-Leser-Anwendung (12), eines zweiten Reports (18), welcher die von dem Endgerät (10) betriebenen Logs aktualisiert, von der Internet-Server-Anwendung (14) gemäß einem beliebigen der vorstehenden Ansprüche.

## Revendications

1. Procédé pour obtenir un premier rapport (18) qui met à jour les journaux exécutés par un terminal (10) par l'intermédiaire d'Internet, ce terminal (10) mettant en oeuvre une application de lecteur RSS (12) et une application de serveur Internet (14) qui peut communiquer avec un serveur de communication unifiée (20) enregistrant les événements de journal Internet du terminal (10), **caractérisé en ce qu'**il comprend les étapes suivantes :
- l'étape de transmission périodique à l'application de serveur Internet (14), par le serveur de communication unifiée (20), d'un deuxième rapport comprenant une mise à jour des journaux du terminal (10)
- l'étape d'obtention périodique à partir de l'application de serveur Internet (14), par l'application de lecteur RSS (12), du premier rapport (18) qui met à jour les journaux exécutés par le terminal (10).

2. Procédé selon la revendication 1 dans lequel l'application de serveur Internet (14) communique avec le serveur de communication unifiée (20) par l'intermédiaire d'un protocole sécurisé qui crypte les données transmises.

3. Procédé selon la revendication 2 dans lequel le protocole sécurisé est le protocole de transfert hypertexte sécurisé.

4. Procédé selon la revendication 1, 2 ou 3 dans lequel l'application de serveur Internet (14) est exécutée par un générateur de rapport de journal (16) qui nécessite une identification d'utilisateur unique pour démarrer l'application de serveur Internet (14) et pour permettre à l'application de lecteur RSS d'obtenir le premier rapport (18) qui met à jour les journaux exécutés par le terminal (10).

5. Procédé selon la revendication 4 dans lequel l'identification d'utilisateur unique nécessaire est fournie au générateur de rapport de journal (16) par une application précédente du terminal (10) ayant demandé cette identification.

6. Procédé selon la revendication 5 dans lequel l'application précédente est le système d'exploitation du terminal (10).

7. Procédé selon les revendications 5 ou 6 dans lequel le générateur de rapport de journal (16) affiche le premier rapport qui met à jour les journaux exécutés par le terminal (10) dans une fenêtre ouverte du terminal (10).

8. Procédé selon la revendication 7 dans lequel la fenêtre ouverte est associée à un navigateur Internet, à une messagerie ou à une interface de système d'exploitation.

9. Procédé selon l'une quelconque des revendications précédentes dans lequel le premier rapport identifie des journaux à partir d'appels vocaux et/ou de courriers électroniques.

10. Procédé selon l'une quelconque des revendications précédentes dans lequel l'application de serveur Internet (14) est associée à une URL à partir de laquelle le lecteur RSS obtient le premier rapport (18) qui met à jour les journaux exécutés par le terminal (10).

11. Terminal (10) mettant en oeuvre une application de lecteur RSS (12) et une application de serveur Internet (14) qui peut communiquer avec un serveur de communication unifiée (20) enregistrant les événements de journal Internet du terminal (10), **caractérisé en ce qu'**il comprend :
- moyens permettant à l'application de serveur Internet (14) de recevoir périodiquement du serveur de communication unifiée (20) un premier rapport comprenant une mise à jour des journaux du terminal (10), et
- moyens permettant à l'application de lecteur RSS (12) d'obtenir périodiquement de l'application de serveur Internet (14) un deuxième rapport (18) qui met à jour les journaux exécutés par le terminal (10) conformément à un procédé selon l'une quelconque des revendications précédentes.
